# EUROPÄISCHE PATENTSCHRIFT

(11) **EP 2 025 553 B1**
(45) Veröffentlichungstag und Bekanntmachung des Hinweises auf die Patenterteilung: **23.03.2011**
(21) Anmeldenummer: 08075889.9
(22) Anmeldetag: 16.01.2006
(51) Int. Cl.: B60N 2/42, B60N 2/44, B60N 2/02

(54) **Sicherheitsvorrichtung für einen Kraftfahrzeugsitz und Verfahren zu deren Ansteuerung**
SAFETY DEVICE FOR AN AUTOMOTIVE SEAT AND METHOD FOR CONTROLLING THE SAME
DISPOSITIF DE SECURITE POUR UN SIEGE DE VEHICULE ET SON PROCEDE DE CONTROLE

(30) Priorität: 19.01.2005 DE 102005003187; 19.01.2005 US 644575 P; 10.06.2005 DE 102005027911
(43) Veröffentlichungstag der Anmeldung: 18.02.2009
(62) Teilanmeldung aus: 06705818.0
(73) Patentinhaber: Takata-Petri AG, 63743 Aschaffenburg (DE)
(72) Erfinder: Al-Samarae, Sami, 10407 Berlin (DE); Koshan, Mahdi, 10437 Berlin (DE)
(74) Vertreter: Baumgärtel, Gunnar

(56) Entgegenhaltungen:
- DE-A1- 10 139 412
- DE-U1- 20 302 628
- PATENT ABSTRACTS OF JAPAN Bd. 2000, Nr. 04, 31. August 2000 (2000-08-31) & JP 2000 020900 A (HITACHI LTD), 21. Januar 2000 (2000-01-21)

## Beschreibung

Die Erfindung betrifft eine Sicherheitsvorrichtung mit den Merkmalen des Oberbegriffs des Anspruchs 1 sowie ein Verfahren zum Ansteuern einer solchen Sicherheitsvorrichtung.

Eine derartige Sicherheitsvorrichtung ist einem Kraftfahrzeugsitz zugeordnet und weist eine sich entlang einer Sitzlängserstreckungsrichtung erstreckende Sitzfläche zum Belegen mit einer auf der Sitzfläche sitzenden Person auf, die typischerweise durch ein Sitzpolster gebildet wird. Die Sicherheitsvorrichtung umfasst weiterhin ein der Sitzfläche zugeordnetes Sicherungselement und eine mit dem Sicherungselement in Wirkverbindung stehenden Verstelleinrichtung. Die Verstelleinrichtung dient dazu, das Sicherungselement in einem Crash-Fall von einer Ruheposition in eine Sicherungsposition zu verstellen und zu einem späteren Zeitpunkt zum Zurückstellen des Sicherungselements aus der Sicherungsposition in die Ruheposition.

In der Sicherungsposition wirkt das Sicherungselement so auf die Sitzfläche ein, ohne deren Lage relativ zum Sitz zu verändern, dass die Sitzfläche und das Sicherungselement zusammen verhindern, dass eine mit einem Sicherheitsgurt des entsprechenden Fahrzeugsitzes angegurtete Person bei einer Crash-bedingten Vorverlagerung in Fahrtrichtung unter dem Sicherheitsgurt, speziell dessen Beckengurt, hindurchtaucht. Dieser Effekt wird in Fachkreisen englischsprachig auch als "submarining" bezeichnet.

Die Sitzfläche bildet dabei einen Bestandteil des Kraftfahrzeugsitzes, dem die Sicherheitsvorrichtung zugeordnet ist. Sie bildet jedoch gleichzeitig auch einen Bestandteil der Sicherheitsvorrichtung selbst, da sie gemeinsam mit dem Sicherungselement die Vorverlagerung des Beckens einer auf der Sitzfläche sitzenden Person begrenzen soll. Hierzu wird das Sicherungselement mittels der Verstelleinrichtung näher an die Sitzfläche (des Sitzpolsters) herangeführt, wobei es gegebenenfalls auch zu einer gewissen Deformation der Sitzfläche kommen kann. Allerdings wird hierbei nicht die räumliche Lage der Sitzfläche als Ganzes (etwa durch Verschwenken der Sitzfläche) verändert.

Eine solche Sicherheitsvorrichtung ist aus dem Dokument WO 2004/007237 bekannt. Im Crash-Fall bzw. beim Auslösen eines PreCrash-Wamsystems wird die Sitzfläche des Kraftfahrzeugsitzes durch die Verstellung des Sicherungselements versteift, um ein Herausrutschen einer auf dem Fahrzeugsitz befindlichen Person unter dem Sicherheitsgurt hindurch zu verhindern. Nach dem Unfall kann das Sicherungselement wieder in seine Ruhelage zurückgestellt werden.

Aus der DE 203 02 628 U1 ist ein Fahrzeugsitz gemäß dem Oberbegriff des Anspruchs 1 mit einer integrierten Insassenrückhaltevorrichtung bekannt. An dem Fahrzeugsitz ist wenigstens ein mit einer Steuereinheit verbundener Elektromotor vorgesehen, der so ausgelegt ist, dass er bei einem Unfall einen Abschnitt des Sitzpolsters abrupt anhebt.

In der JP 2000020900 A wird eine Einrichtung zur Erzeugung eines Warnsignals für einen Fahrer eines Kraftfahrzeuges beschrieben. Bei einer Gefahrensituation erzeugt ein Vibrationserzeugungsgerät eine Vibration des Fahrzeugsitzes, auf dem der Fahrer sitzt, so dass der Fahrer auf die Gefahrensituation aufmerksam wird.

Der Erfindung liegt die Aufgabe zugrunde, die Einsatzmöglichkeiten der eingangs beschriebenen Sicherheitsvorrichtung zu vermehren.

Die Aufgabe wird von einer Sicherheitsvorrichtung mit den Kennzeichen des Anspruchs 1 gelöst. Die Verstelleinrichtung ist dadurch nicht mehr darauf beschränkt, das Sicherungselement zwischen einer Ruheposition und einer Sicherungsposition zu verstellen, sondern kann über die Verstelleinrichtung auch in eine oder mehrere Zwischenpositionen verstellt werden, was eine nützliche Zusatzfunktion bereitstellt. Dadurch kann z.B. ein manuelles Verstellen der Sitzhärte ermöglicht werden. Die Verstelleinrichtung weist mehrere Vibrationsfunktionen auf, in denen die Verstelleinrichtung in Abhängigkeit der von den Sensoren zum Detektieren des Fahrverhaltens des Kraftfahrzeuges detektierten Gefahrensituation unterschiedliche Teile des Sicherungselements zwischen mindestens zwei unterschiedlichen Positionen relativ zur Sitzfläche in einer Vibrationsbewegung hin- und herbewegt. So kann der Fahrer anhand der ausgeführten Vibrationsbewegung zwischen unterschiedlichen, von den Sensoren detektierten Gefahrensituationen wie z.B. dem Abkommen von der Fahrbahn, dem Unterschreiten eines Sicherheitsabstandes zu einer bestimmten Fahrzeugseite hin oder dem Überschreiten der zulässigen Höchstgeschwindigkeit unterscheiden.

Unter der Ruheposition wird dabei die unterste Stellung des Sicherungselements verstanden, also die Position des Sicherungselements, die von der Sicherungsposition am weitesten entfernt ist. In der Sicherungsposition befindet sich das Sicherungselement in seiner obersten Stellung. Sicherungsposition und Ruheposition bilden die Umkehrpunkte der maximalen Verstellbahn des Sicherungselements. Das Sicherungselement kann also durch die Verstelleinrichtung in eine Position bzw. Lage relativ zur Sitzfläche gestellt werden, die entweder der Sicherungsposition, der Ruheposition oder mindestens einer Zwischenposition dazwischen entspricht.

Bevorzugt ist das Sicherungselement durch die Verstelleinrichtung in mehrere Zwischenpositionen zwischen der Ruheposition und der Sicherungsposition verstellbar. Insbesondere kann die Verstelleinrichtung zum im Wesentlichen stufenlosen Verstellen des Sicherungselements zwischen der Ruheposition und der Sicherungsposition dienen. Die Positionierungsmöglichkeiten des Sicherungselements werden dadurch erhöht.

Bei einer Ausführungsform ist durch Einstellen der Position des Sicherungselements die Sitzhärte der Sitzfläche einstellbar. Dabei kann ein Regelungs- oder Bedienelement vorgesehen sein, mittels dem die Sitzhärte z.B. manuell einstellbar ist. Durch Verschieben bzw. Einstellen einer mittels des Sicherungselementes erzeugbaren Sitzrampe kann ein Sitzschaum des Kraftfahrzeugsitzes unterschiedlich komprimiert werden und somit die Sitzhärte unterschiedlich eingestellt werden. Dies bietet einen individuell einstellbaren und dadurch erhöhten Sitzkomfort für den Fahrzeuginsassen.

Die Verstelleinrichtung ist bevorzugt so ausgebildet, dass sie durch automatisches Einstellen der Position des Sicherungselements relativ zur Sitzfläche die Sitzhärte der Sitzfläche an eine Geschwindigkeit des Kraftfahrzeuges anpasst, in der sich der Kraftfahrzeugsitz mit der Sicherheitsvorrichtung befindet. Diese Sitzhärtenanpassung kann z.B. mittels Sensoren wie z. B. Querbschleunigungssensoren des Fahrzeuges adaptiv zum Fahrstil erfolgen, um so z.B. einen besseren Halt des Fahrers bei einem "sportlichen" Fahrstil zu ermöglichen.

Die Sicherheitsvorrichtung weist bevorzugt mindestens einen Verstellmotor auf, mittels dem die Verstelleinrichtung das Sicherungselement bewegt. Durch eine Bewegung des Sicherungselements relativ zur Sitzfläche, insbesondere durch Kompression des Sitzschaumes, wird auf die Sitzfläche eingewirkt, ohne notwendigerweise deren Lage zu verändern.

In einer besonders bevorzugten Ausführungsform der Sicherheitsvorrichtung ist die Verstelleinrichtung als automatische Verstelleinrichtung ausgebildet, die mit Sensoren zum Detektieren des Fahrverhaltens eines Kraftfahrzeuges kommuniziert, in dem die Sicherungsvorrichtung für einen Kraftfahrzeugsitz des Kraftfahrzeuges eingebaut ist. Die Sensoren senden ein Signal aus, wenn sie eine Gefahrensituation, insbesondere eine Crash-Situation detektieren. Auf dieses Signal hin verstellt die Verstelleinrichtung automatisch das Sicherungselement in die Sicherungsposition, um so durch das Erzeugen einer (geneigten, insbesondere zum vorderen Sitzende hin ansteigenden) Sitzrampe ein Durchrutschen einer Person unter einem Sicherheitsgurt ("submarining") zu verhindern. Das Verstellen des Sicherungselements erfolgt dabei nicht nur aus der Ruheposition heraus, sondern auch wenn es zuvor in einer Zwischenposition eingestellt war.

Das Auslösen der Vibrationsfunktionen geschieht auf ein Signal der Detektoren hin, und dient zur Warnung vor einer Gefahrensituation als haptisches Warnsignal über die Sitzfläche. Die oszillierende Vibrationsbewegung erlaubt eine haptische und gutfühlbare Warnung im Beckenbereich. In Kombination mit ACC (Active Cruise Control) oder PreCrash Sensorik kann diese Option zur Warnung des Fahrers ausgenutzt werden.

Bevorzugt erfolgt dabei die Vibrationsbewegung des Sicherungselements um die aktuell eingestellte Position des Sicherungselements herum. Ist das Sicherungselement in einer Zwischenposition eingestellt, so können die Umkehrpunkte der Vibrationsbewegung zwei weitere Zwischenpositionen sein, von denen die eine näher an der Ruheposition und die andere näher an der Sicherungsposition liegt als die eingestellte Zwischenposition. Alternativ dazu kann die Vibrationsbewegung auch zwischen der eingestellten Zwischenposition und einer anderen Position als Umkehrpunkte der Vibrationsbewegung erfolgen, also z.B. zwischen der eingestellten Zwischenposition einerseits und der Sicherungsposition, der Ruheposition oder einer weiteren Zwischenposition andererseits. Dabei wäre auch eine Vibrationsbewegung zwischen der Ruheposition und der Sicherungsposition möglich, was aber abhängig von deren Abstand zueinander aufgrund der extremen Hubhöhe einen schlechteren Komfort für die auf dem Kraftfahrzeugsitz sitzende Person zur Folge hätte.

Dabei sind durch die Verstelleinrichtung bevorzugt eine rechte Seite und eine linke Seite des Sicherungselements separat zwischen mindestens zwei Positionen relativ zur Sitzfläche in einer Vibrationsbewegung hin- und herbewegbar. Das separate Ansteuern eines linken oder rechten Teils des Sicherungselements ist besonders dazu geeignet, den Fahrer vor dem Abkommen von der Fahrbahn in der entsprechenden Fahrzeugrichtung bzw. dem Unterschreiten eines Sicherheitsabstandes in dieser Richtung zu warnen.

Bevorzugt weist die Verstelleinrichtung mindestens zwei Verstellmotoren auf, nämlich einen, der einer rechten Seite des Sicherungselements zugeordnet ist, und einen, der dessen linker Seite zugeordnet ist. Mittels der Verstellmotoren ist die rechte Seite und die linke Seite des Sicherungselements separat in mindestens eine sich zwischen der Sicherungsposition und der Ruheposition befindliche Zwischenposition verstellbar sowie ansteuerbar.

Gemäß einer bevorzugten Weiterbildung der Erfindung ist die zur Betätigung des Sicherungselementes vorgesehene Verstelleinrichtung gekoppelt mit Mitteln zur Aktivierung eines motorisierten Sicherheitsgurtsystems des entsprechenden Kraftfahrzeugsitzes. Hiermit kann in kritischen Fahrsituationen, in Ergänzung und parallel zu den vorbeschriebenen Funktionen des Sicherungselementes, eine automatische Straffung des Sicherheitsgurtes hervorgerufen werden, das (insbesondere in einer Pre-Crash-Phase) dem entsprechenden Fahrzeuginsassen zusätzlichen Halt vermittelt. Hierdurch kann dem Fahrzeuginsassen insbesondere auch ein Gefühl der Unterstützung in kritischen Fahrsituationen, wie z. B. Schleudersituationen, vermittelt werden.

In einer Ausführungsform ist das Sicherungselement unterhalb einer Polsterung der Sitzfläche, insbesondere im Kraftfahrzeugsitz selber, angeordnet und wird in einem Crash-Fall mittels der Verstelleinrichtung näher an die Sitzfläche herangeführt. Insbesondere lässt sich das Sicherungselement dabei auf einer Sitzschale des Sitzteils anordnen. Dadurch kann das Sicherungselement bei einem Crash-Fall auf einfache Weise in Richtung der Sitzfläche bewegt werden, so dass Sitzfläche und Sicherungselement eine im Wesentlichen entlang der Erstreckungsrichtung des Sicherungselements wirksame Schwelle bilden, die dem Vorverlagern des Beckens einer auf dem Kraftfahrzeugsitz sitzenden Person entlang der gesamten Breite des Kraftfahrzeugsitzes entgegenwirken.

Vorteilhaft ist das Sicherungselement als Rampe ausgebildet, die so angeordnet ist, dass sie auf die Sitzfläche bzw. auf dessen Polsterung durch Druck einwirkt.

Das Sicherungselement weist hierzu bevorzugt einen Verstellabschnitt auf, der bei der Zustellbewegung des Sicherungselements in eine solche Position gebracht wird, dass er (zusammen mit der Sitzfläche) die Vorverlagerung des Beckens einer auf der entsprechenden Sitzfläche sitzenden Person begrenzt.

Ferner weist das Sicherungselement mindestens einen Abschnitt, z.B. in Form eines Endabschnitts, auf, über den das Sicherungselement entlang seiner Bewegungsrichtung geführt ist und an dem gegebenenfalls auch eine Antriebseinrichtung angreifen kann.

Die Zustellbewegung des Sicherungselements in einem Crash-Fall kann als Translation, als Rotation oder als eine Kombination einer Translation mit einer Rotation ausgebildet sein. Alle drei Varianten einer Zustellbewegung haben gemeinsam, dass sich das Sicherungselement in Richtung des Beckens der auf der Sitzfläche des Kraftfahrzeugsitzes sitzenden Person bewegt.

Die erfindungsgemäße Aufgabe wird weiterhin durch ein Verfahren nach Anspruch 21 zum Ansteuern einer erfindungsgemäßen Sicherheitsvorrichtung gelöst, die einem Kraftfahrzeugsitz eines Kraftfahrzeuges zugeordnet ist. Danach wird von mindestens einem Sensor zum Detektieren des Fahrverhaltens des Kraftfahrzeuges ein Signal an die Verstelleinrichtung gesendet, die daraufhin automatisch das Sicherungselement verstellt, insbesondere eine Vibrationsbewegung des Sicherungselements bewirkt.

Die erfindungsgemäße Sicherheitsvorrichtung stellt ein System zur Verfügung, welches gleichzeitig als leistungsfähiges Komfort-, Warn- und Rückhaltesystem fungieren kann und erweitert die Funktionen der aus dem Dokument WO 2004/007237 bekannten "Reversiblen Aktiven Sitzrampe".

In den Figuren ist eine Ausführungsform der Erfindung näher dargestellt.

Es zeigen:
- Figur 1: einen schematischen Querschnitt durch einen Kraftfahrzeugsitz mit einer Sicherheitsvorrichtung mit einem Sicherungselement in einer Sicherungsposition;
- Figur 2: einen schematischen Querschnitt durch einen Kraftfahrzeugsitz mit einer Sicherheitsvorrichtung mit einem Sicherungselement, das sich einmal in der Ruheposition und einmal in der Sicherungsposition befindet;
- Figur 3: eine schematische Ansicht eines Sicherungselements einer Sicherheitsvorrichtung, das eine Oszillations- bzw. Vibrationsbewegung als haptisches Warnsignal durchführt;
- Figur 4A: eine schematische Ansicht des Sicherungselements der Figur 3, das eine einseitige Oszillations- bzw. Vibrationsbewegung auf seiner rechten Seite ausführt und dadurch an der rechten Kraftfahrzeugsitzseite ein haptisches Warnsignal zum Warnen vor einem unbeabsichtigten Verlassen der Fahrspur nach rechts durchführt und
- Figur 4B: eine schematische Ansicht des Sicherungselements der Figur 3, das eine einseitige Oszillations- bzw. Vibrationsbewegung auf seiner linken Seite ausführt und dadurch an der linken Kraftfahrzeugsitzseite ein haptisches Warnsignal zum Warnen vor einem unbeabsichtigten Verlassen der Fahrspur nach links durchführt.

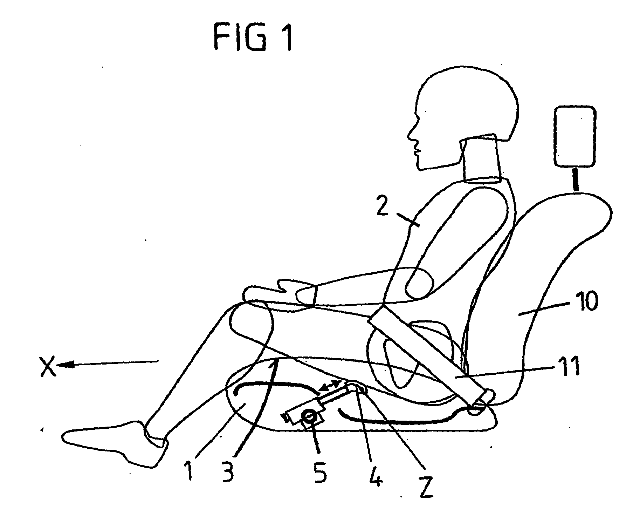

Figur 1 zeigt einen schematischen Querschnitt durch einen Kraftfahrzeugsitz 1, in den eine Sicherheitsvorrichtung integriert ist. Der Kraftfahrzeugsitz 1 weist eine Lehne 10 sowie eine sich entlang einer Fahrzeuglängsachse X (und zugleich der Sitzlängsrichtung) erstreckende Sitzfläche 3 auf, auf der eine Person 2 Platz nehmen kann, für die ein Sicherheitsgurt 11 zum Angurten vorgesehen ist.

Die Sicherungsvorrichtung weist neben der Sitzfläche 3 ein Sicherungselement 4 auf, das unterhalb einer Polsterung der Sitzfläche 3 im Kraftfahrzeugsitz 1 angeordnet und integriert ist. Eine Verstelleinrichtung 5 ist über ein Getriebe mit dem Sicherungselement 4 gekoppelt.

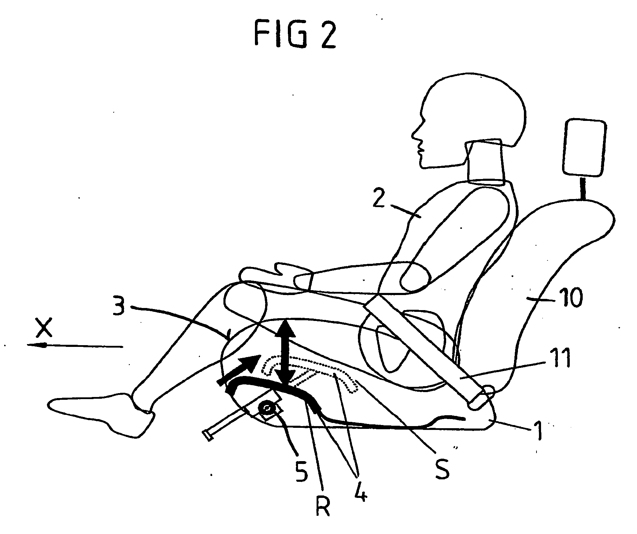

Das Sicherungselement 4 ist als quer zur Fahrzeuglängsachse X (Sitzlängsrichtung) verlaufendes (schalen- oder balkenartiges) Element ausgebildet (vgl. Figuren 2, 3, 4a und 4b), das von unten an die Polsterung der Sitzfläche angelenkt ist und über die Verstelleinrichtung 5 in unterschiedlichen Positionen relativ zur Sitzfläche 3 eingestellt werden kann. Dabei kann es gegebenenfalls zu einer gewissen Deformation der Sitzfläche 3 kommen. Allerdings wird hierbei nicht die räumliche Lage der Sitzfläche 3 als Ganzes (etwa durch ein Verschwenken) verändert, sondern nur deren Form und Härte (durch Bildung einer Sitzrampe). Während gemäß Figur 1 das Sicherungselement 4 im (in Sitzlängsrichtung betrachtet) mittleren Bereich der Sitzschale angeordnet ist, bildet es gemäß Figur 2 den vorderen Bereich der Sitzschale selbst.

Das Sicherungselement 4 ist verschiebbar ausgebildet und zwischen einer Ruheposition R und einer Sicherungsposition S verstellbar, vergl. in Figur 2, die die Umkehrpunkte der Verschiebungsbewegung des Sicherungselements 4 bilden. In der Ruheposition R ist das Sicherungselement 4 am weitesten von der Sitzfläche 3 entfernt, in der Sicherungsposition S ist das Sicherungselement 4 zur Erzeugung einer Sitzrampe maximal in das Sitzpolster der Sitzfläche 3 hereingedrückt. In der Sicherungsposition S wirkt das Sicherungselement 4 auf die Sitzfläche 3 ein, ohne dessen Lage relativ zum Sitz zu verändern, damit die Sitzfläche 3 und das Sicherungselement 4 zusammen (durch Bildung einer Sitzrampe) verhindern, dass die mit dem Sicherheitsgurt 11 des Fahrzeugsitzes 3 angegurtete Person 2 bei einer Crash-bedingten Vorverlagerung in Fahrtrichtung X unter dem Sicherheitsgurt 11, speziell dessen Beckengurt, hindurchtaucht.

Zwischen der Ruheposition R und der Sicherungsposition S besitzt das Sicherungselement 4 so viele Zwischenpositionen Z, dass es im Wesentlichen stufenlos zwischen der Ruheposition R und der Sicherungsposition S verstellbar ist.

Die Verstellbewegung des Sicherungselements 4 erfolgt in dem in den Figuren dargestellten Ausführungsbeispiel linear, sie kann aber alternativ auch entlang einer anderen Bahnbewegung erfolgen.

Die Position des Sicherungselements 4 beeinflusst die Sitzhärte der Sitzfläche 3 und kann mittels der Verstellvorrichtung 5 eingestellt werden. Das Sicherungselement 4 kann aufgrund seiner Verschiebbarkeit weiter entfernt von Becken und Oberschenkel platziert werden, was eine höhere Schaumdicke der Sitzfläche 3 bewirkt und für einen besseren Sitzkomfort dient. Die Verstellvorrichtung 5 kann manuell bedient oder über ein nicht dargestelltes Betätigungselement angesteuert werden, das mit der Verstellvorrichtung 5 so gekoppelt ist, dass diese das Sicherungselement 4 in die gewünschte Position bewegt.

Die Verstelleinrichtung 5 ist so ausgebildet, dass sie in einem Crash-Fall das Sicherungselement 4 automatisch näher an die Sitzfläche 3 heranführt, so dass die Sitzfläche 3 und das Sicherungselement 4 eine im Wesentlichen entlang der Erstreckungsrichtung des Sicherungselements 4 quer zur Fahrtrichtung X wirksame Schwelle bilden, die dem Vorverlagern des Beckens einer auf dem Kraftfahrzeugsitz sitzenden Person 2 entlang der gesamten Breite des Kraftfahrzeugsitzes 1 entgegenwirken.

Der Crash-Fall wird durch Sensoren festgestellt bzw. durch ein Pre-Crash System detektiert, das den Unfall bereits vor dessen Eintreten detektiert und daraufhin ein Signal an die Verstelleinrichtung 5 sendet, die das Sicherungselement 4 unmittelbar vor dem Unfall aus seiner eingestellten Position in die Sicherungsposition S verstellt, um so eine frühzeitige Rückhaltung der Person 2 zu gewährleisten und ein Submarining zu vermeiden.

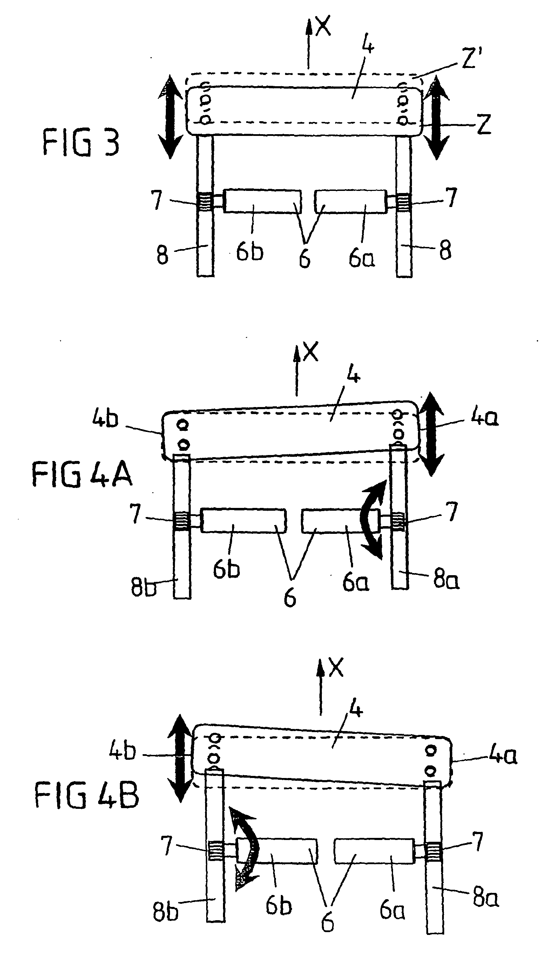

Die Figur 3 zeigt eine schematische Ansicht auf das Sicherungselement 4 der Figuren 1 und 2, anhand der eine weitere Funktion der Sicherheitsvorrichtung beschrieben wird. Das Sicherungselement 4 ist als Balken ausgebildet, der über zwei Stangen eines Gestänges 8 mit zwei Verstellmotoren 6 gekoppelt ist. Dabei erstreckt sich das Gestänge 8 entlang der Verstellrichtung des Sicherungselements.

Die Verstellmotoren 6 wirken über Zahnräder 7 auf das Gestänge 8 derart ein, dass es entlang seiner Erstreckungsrichtung verschoben wird. Die Verstellmotoren 6 sind Teil der Verstelleinrichtung 5. Werden sie betätigt, wird das Gestänge 8 verschoben und die Position des damit verbundenen Sicherungselements 4 verändert.

Warnen nicht dargestellte Sensoren des Kraftfahrzeuges vor einer Gefahrensituation, insbesondere einem Auffahrunfall bzw. vor einem zu geringen Sicherheitsabstand, so werden die Verstellmotoren 6 automatisch betätigt. Sie wechseln rhythmisch ihre Drehrichtung und erzeugen über die Zahnräder 7 eine Vibrationsbewegung des Gestänges 8. Das Gestänge 8 überträgt die Vibrationsbewegung auf das Sicherungselement 4, das so auf die Polsterung der Sitzfläche 3 einwirkt, dass für die auf dem Kraftfahrzeugsitz 1 befindliche Person 2 ein haptisches Warnsignal in Form eines vibrierenden Sitzes wahrnehmbar ist. Das Sicherungselement 4 bewegt sich dabei zwischen der eingestellten Zwischenposition Z und einer davon beabstandeten Zwischenposition Z' hin- und her. Die Vibrationsbewegung kann auch um die Ruheposition R und die Sicherungsposition S herum erfolgen, wenn das Sicherungselement 4 in der Warnsituation in dieser Position eingestellt ist.

Die Figuren 4a und 4b zeigen wie die Figur 3 eine schematische Ansicht auf das Sicherungselement 4. Die Verstellmotoren 6 bestehen aus einem rechten Verstellmotor 6a und einem linken Verstellmotor 6b. Diese Verstellmotoren 6a und 6b sind einzeln ansteuerbar. Gemäß Figur 4a wird nur der rechte Verstellmotor 6a angesteuert und bewegt über die rechte Stange 8a des Gestänges 8 die rechte Seite 4a des Sicherungselements 4, die eine Vibrationsbewegung ausführt.

Analog dazu wird in der in Figur 4b gezeigten Situation nur der linke Verstellmotor 6b angesteuert, der die linke Seite 4b des Sicherungselements 4 zu einer Vibrationsbewegung veranlasst.

Eine solche einseitige Vibrationsbewegung auf der linken oder rechten Seite ist für die auf dem Kraftfahrzeugsitz 1 befindliche Person 2 auch nur in der entsprechenden Sitzseite als Warnsignal zu fühlen. Ein solches Warnsignal wird automatisch bewirkt, wenn das Kraftfahrzeug von der vorgeschriebenen Fahrspur abkommt oder abzukommen droht. Dabei korreliert die Seite, an der das Fahrzeug von der Spur abkommt mit der Sitzseite, in der das Warnsignal ausgelöst wird.

Beim unabsichtlichem Verlassen der Fahrspur nach rechts oder links kann die rechtsseitige oder linksseitige oszillierende Bewegung des Sicherungselementes 4 zur Warnung oder Aufforderung des Fahrers, die Spur zu korrigieren, ausgenutzt werden. Dies setzt eine spezielle Sensorik (z.B. Video) voraus, die der Verstelleinrichtung 5 das Signal zum Ausführen der Vibrationsbewegung übersendet.

Zur Verbesserung des Seitenhalts bei Kurvenfahrten kann die Sitzhärte in Abhängigkeit von der Kurvengeschwindigkeit und der Fahrtrichtungsänderung auch automatisch einseitig verändert werden. In diesem Fall erfolgt die beschriebene rechts- bzw. linksseitige Bewegung des Sicherungselementes 4 nicht oszillierend sondern stetig.

Damit das Sicherungselement 4 eine einseitige Bewegung ausführen kann, ist der Ankoppelpunkt mit dem Gestänge 8 mit Spiel versehen und nicht als starre Verbindung ausgeführt.

### Bezugszeichenliste

- 1: Kraftfahrzeugsitz
- 2: Person
- 3: Sitzfläche
- 4: Sicherungselement
- 4a: Rechte Seite des Sicherungselements
- 4b: Linke Seite des Sicherungselements
- 5: Verstelleinrichtung
- 6: Verstellmotor
- 6a: Rechter Verstellmotor
- 6b: Linker Verstellmotor
- 7: Zahnrad
- 8: Gestänge
- 8a: Rechte Stange des Gestänges
- 8b: Linke Stange des Gestänges
- 10: Lehne
- 11: Sicherheitsgurt
- R: Ruheposition
- S: Sicherungsposition
- X: Sitzlängserstreckungsrichtung
- Z, Z': Zwischenposition

## Patentansprüche

1. Sicherheitsvorrichtung für einen Kraftfahrzeugsitz (1) mit
- einer sich entlang einer Sitzlängserstreckungsrichtung (X) erstreckenden Sitzfläche (3) zum Belegen mit einer auf der Sitzfläche (3) sitzenden Person (2),
- einem der Sitzfläche (3) zugeordneten Sicherungselement (4) und
- einer mit dem Sicherungselement (4) in Wirkverbindung stehenden Verstelleinrichtung (5), die das Sicherungselement (4) in einem Crash-Fall von einer Ruheposition (R) in eine Sicherungsposition (S) verstellt und zum Zurückstellen des Sicherungselements (4) aus der Sicherungsposition (S) in die Ruheposition (R) dient, wobei die Verstelleinrichtung (5) als automatische Verstelleinrichtung ausgebildet ist, die mit Sensoren zum Detektieren des Fahrverhaltens eines Kraftfahrzeuges kommuniziert, in dem die Sicherungsvorrichtung für einen Kraftfahrzeugsitz (1) des Kraftfahrzeuges eingebaut ist, und wobei die Verstelleinrichtung (5) eine Vibrationsbewegung der Sitzfläche (3) ausführt, wenn die Sensoren zum Detektieren des Fahrverhaltens des Kraftfahrzeuges eine Gefahrensituation detektieren,
- wobei das Sicherungselement (4) in der Sicherungsposition (S), ohne deren räumliche Lage zu verändern, derart auf die Sitzfläche (3) einwirkt, dass die Sitzfläche (3) und das Sicherungselement (4) einem Vorverlagern des Beckens einer auf der Sitzfläche (3) sitzenden Person (2) in die Sitzlängserstreckungsrichtung (X) entgegenwirken,
**dadurch gekennzeichnet, dass**
die Verstelleinrichtung (5) dazu vorgesehen und ausgebildet ist, das Sicherungselement (4) in mindestens eine sich zwischen der Sicherungsposition (S) und der Ruheposition (R) befindliche Zwischenposition (Z) zu verstellen, wobei die Verstelleinrichtung (5) mehrere Vibrationsfunktionen aufweist, in denen die Verstelleinrichtung (5) in Abhängigkeit der von den Sensoren zum Detektieren des Fahrverhaltens des Kraftfahrzeuges detektierten Gefahrensituation unterschiedliche Teile (4a; 4b; 4) des Sicherungselements (4) zwischen mindestens zwei unterschiedlichen Positionen (R; Z; S; Z') relativ zur Sitzfläche (3) in einer Vibrationsbewegung hin- und herbewegt.

2. Sicherheitsvorrichtung nach Anspruch 1, **gekennzeichnet durch** mindestens einen Verstellmotor (6; 6a; 6b), mittels dem die Verstelleinrichtung (5) das Sicherungselement (4) bewegt.

3. Sicherheitsvorrichtung nach einem der vorangegangenen Ansprüche, **dadurch gekennzeichnet, dass** die Vibrationsbewegung des Sicherungselements (4) um die aktuell eingestellte Position (R; Z; S) des Sicherungselements (4) herum erfolgt.

4. Sicherheitsvorrichtung nach einem der vorangegangenen Ansprüche, **dadurch gekennzeichnet, dass** durch die Verstelleinrichtung (5) eine rechte Seite (4a) und eine linke Seite (4b) des Sicherungselements (4) separat zwischen mindestens zwei Positionen (R; Z; S; Z') relativ zur Sitzfläche (3) in einer Vibrationsbewegung hin- und her bewegbar ist.

5. Sicherheitsvorrichtung nach einem der vorangegangenen Ansprüche, **dadurch gekennzeichnet, dass** die Verstelleinrichtung (5) mindestens zwei Verstellmotoren (6a, 6b) aufweist, mittels derer eine rechte Seite (4a) und eine linke Seite (4b) des Sicherungselements (4) separat in mindestens eine sich zwischen der Sicherungsposition (S) und der Ruheposition (R) befindliche Zwischenposition (Z) verstellbar ist.

6. Sicherheitsvorrichtung nach einem der vorangegangenen Ansprüche, **dadurch gekennzeichnet, dass** die Verstelleinrichtung (5) mindestens zwei Verstellmotoren (6a, 6b) aufweist, mittels derer eine rechte Seite (4a) und eine linke Seite (4b) des Sicherungselements (4) separat ansteuerbar ist.

7. Sicherheitsvorrichtung nach einem der vorangegangenen Ansprüche, **dadurch gekennzeichnet, dass** das Sicherungselement (4) unterhalb der Sitzfläche (3) angeordnet ist und in einem Crash-Fall mittels der Verstelleinrichtung (5) näher an die Sitzfläche (3) herangeführt wird.

8. Sicherheitsvorrichtung nach Anspruch 7, **dadurch gekennzeichnet, dass** die Verstelleinrichtung (5) durch automatisches einseitiges Einstellen der Position des Sicherungselementes (4) relativ zur Sitzfläche (3) die Sitzhärte der Sitzfläche (3) an eine Fahrtrichtungsänderung des Kraftfahrzeugs anpasst.

9. Sicherheitsvorrichtung nach einem der vorangegangenen Ansprüche, **dadurch gekennzeichnet, dass** das Sicherungselement (4) zur Bildung einer Rampe ausgeführt ist.

10. Sicherheitsvorrichtung nach Anspruch 5 oder einem der Ansprüche 6 bis 9 soweit rückbezogen auf Anspruch 5, **dadurch gekennzeichnet, dass** das Sicherungselement (4) als Balken ausgebildet ist, der über zwei Stangen eines Gestänges (8) mit den beiden Verstellmotoren (6) gekoppelt ist, wobei sich das Gestänge (8) entlang der Verstellrichtung des Sicherungselementes (4) erstreckt, und wobei die Verstellmotoren (6) über Zahnräder (7) derart auf das Gestänge (8) einwirken, dass es entlang seiner Erstreckungsrichtung verschoben wird, wobei die Position des damit verbundenen Sicherungselementes (4) verändert wird.

11. Sicherheitsvorrichtung nach Anspruch 10, **dadurch gekennzeichnet, dass** die Verstellmotoren (6) bei einer Gefahrensituation automatisch betätigt werden, wobei sie ihre Drehrichtung wechseln und über die Zahnräder (7) eine Vibrationsbewegung des Gestänges (8) erzeugen, das die Vibrationsbewegung auf das Sicherungselement (4) überträgt.

12. Verfahren zum Ansteuern einer Sicherheitsvorrichtung nach einem der vorangegangenen Ansprüche, die einem Kraftfahrzeugsitz eines Kraftfahrzeuges zugeordnet ist, **dadurch gekennzeichnet, dass** von mindestens einem Sensor zum Detektieren des Fahrverhaltens des Kraftfahrzeuges ein Signal an die Verstelleinrichtung (5) gesendet wird, die daraufhin automatisch das Sicherungselement (4) verstellt, insbesondere eine Vibrationsbewegung des Sicherungselements (4) bewirkt.

## Claims

1. A safety device for a motor vehicle seat (1) having
- a seat surface (3) which extends in the longitudinal direction (X) of the seat and is intended to be occupied by a person (2) sitting on the seat surface (3),
- a securing element (4) which is assigned to the seat surface (3), and
- an adjustment device (5) which is operatively connected to the securing element (4) and adjusts the securing element (4) from a resting position (R) into a securing position (S) in the event of a crash, and serves to reset the securing element (4) from the securing position (S) into the resting position (R), wherein the adjustment device (5) is embodied as an automatic adjustment device which communicates with sensors for detecting the driving behavior of a motor vehicle in which the safety device for a motor vehicle seat (1) of the motor vehicle is installed, and wherein the adjustment device (5) carries out a vibration movement of the seat surface (3) when the sensors for detecting the driving behavior of the motor vehicle detect a hazardous situation,
- wherein the securing element (4) is acting on the seat surface (3) in the securing position (S) in such a way that the seat surface (3) and the securing element (4) counteract forward movement of the pelvic area of a person (2) sitting on the seat surface (3) in the longitudinal direction (X) of the seat, without changing the spatial location of said seat surface (3),
**characterized in that**
the adjustment device (5) is provided and designed for the purpose of adjusting the securing element (4) into at least one intermediate position (Z) located between the securing position (S) and the resting position (R), wherein the adjustment device (5) has a plurality of vibration functions in which the adjustment device (5) moves different parts (4a; 4b; 4) of the securing element (4) to and fro in a vibration movement between at least two different positions (R; Z; S; Z') relative to the seat surface (3) as a function of the hazardous situation detected by the sensors for detecting the driving behaviour of the motor vehicle.

2. The safety device as claimed in claim 1 **characterized by** at least one adjustment motor (6; 6a; 6b) by means of which the adjustment device (5) moves the securing element (4).

3. The safety device as claimed in one of the preceding claims, **characterized in that** the vibration movement of the securing element (4) occurs about the currently set position (R; Z; S) of the securing element (4).

4. The safety device as claimed in one of the preceding claims, **characterized in that** the adjustment device (5) can move a right-hand side (4a) and a left-hand side (4b) of the securing element (4) to and fro separately in a vibration movement between at least two positions (R; Z; S; Z') relative to the seat surface (3).

5. The safety device as claimed in one of the preceding claims, **characterized in that** the adjustment device (5) has at least two adjustment motors (6a, 6b) by means of which a right hand side (4a) and a left hand side (4b) of the securing element (4) can be adjusted separately to at least one intermediate position (Z) located between the securing position (S) and the resting position (R).

6. The safety device as claimed in one of the preceding claims, **characterized in that** the adjustment device (5) has at least two adjustment motors (6a, 6b) by means of which a right hand side (4a) and a left hand side (4b) of the securing element (4) can be actuated separately.

7. The safety device as claimed in one of the preceding claims, **characterized in that** the securing element (4) is arranged underneath the seat surface (3) and in the event of a crash is moved closer to the seat surface (3) by means of the adjustment device (5).

8. The safety device as claimed in claim 7, **characterized in that** the adjustment device (5) adapts the seat hardness of the seat surface (3) to a change in the direction of travel of the motor vehicle by automatic one-sided adjustment of the position of the securing element (4) relative to the seat surface (3).

9. The safety device as claimed in one of the preceding claims, **characterized in that** the securing element (4) is designed to form a ramp.

10. The safety device as claimed in claim 5 or one of the claims 6 to 9 insofar as they refer back to claim 5, **characterized in that** the securing element (4) is embodied as a bar which is connected via two rods of a linkage (8) to the two adjustment motors (6), wherein the linkage (8) extends in the adjustment direction of the securing element (4), and wherein adjustment motors (6) act on the linkage (8) via gearwheels (7) in such a way that said linkage (8) moved in the direction of its extent, wherein the position of the securing element (4) connected thereto is changed.

11. The safety device as claimed in claim 10, **characterized in that** the adjustment motors (6) are activated automatically in a hazardous situation, wherein they change their direction of rotation and generate a vibration movement of the linkage via the gearwheels (7), wherein the linkage (8) transmits the vibration movement to the securing element (4).

12. A method for actuating a safety device as claimed in one of the preceding claims, which safety device is assigned to a motor vehicle seat of a motor vehicle, **characterized in that** a signal is transmitted to the adjustment device (5) from at least one sensor for detecting the driving behavior of the motor vehicle, and said adjustment device (5) subsequently automatically adjusts the securing element (4), in particular brings about a vibration movement of the securing element (4).

## Revendications

1. Dispositif de sécurité pour un siège de véhicule automobile (1) comprenant
- une surface d'assise (3) qui s'étend le long d'une direction d'extension longitudinale (X) du siège pour être occupée par une personne (2) assise sur la surface d'assise (3),
- un élément de sécurité (4) associé à la surface d'assise (3) et
- un dispositif de réglage (5) qui se trouve en liaison d'action avec l'élément de sécurité (4) et qui déplace en cas de collision l'élément de sécurité (4) depuis une position de repos (R) jusque dans une position de sécurité (S) et qui sert à ramener l'élément de sécurité (4) hors de la position de sécurité (S) jusque dans la position de repos (R), dans lequel le dispositif de réglage (5) est réalisé comme dispositif de réglage automatique qui communique avec des détecteurs pour détecter le comportement de circulation d'un véhicule automobile dans lequel le dispositif de sécurité est monté pour un siège (1) du véhicule automobile, et dans lequel le dispositif de sécurité (5) exécute un mouvement de vibrations de la surface d'assise (3) quand les détecteurs destinés à détecter le comportement de circulation du véhicule détectent une situation de danger,
- dans lequel l'élément de sécurité (4) agit, dans la position de sécurité (S) et sans modifier sa position dans l'espace, sur la surface d'assise (3) de telle manière que la surface d'assise (3) et l'élément de sécurité (4) s'opposent à un déplacement vers l'avant du bassin d'une personne (2) assise sur la surface d'assise (3) dans la direction d'extension longitudinale (X) du siège,
**caractérisé en ce que**
le dispositif de réglage (5) est prévu et réalisé pour déplacer l'élément de sécurité (4) dans au moins une position intermédiaire (Z) qui se trouve entre la position de sécurité (S) et la position de repos (R), et le dispositif de réglage (5) présente plusieurs fonctions de vibration dans lesquelles le dispositif de réglage (5) déplace en va-et-vient en un mouvement de vibrations des parties différentes (4a ; 4b ; 4) de l'élément de sécurité (4) entre au moins deux positions différentes (R ; Z ; S ; Z') relativ à la surface d'assise (3), en fonction de la situation de danger détectée par les détecteurs destinés à détecter le comportement de circulation du véhicule automobile.

2. Dispositif de sécurité selon la revendication 1, **caractérisé par** au moins un moteur de réglage (6 ; 6a ; 6b) au moyen duquel le dispositif de réglage (5) déplace l'élément de sécurité (4).

3. Dispositif de sécurité selon l'une des revendications précédentes, **caractérisé en ce que** le mouvement de vibrations de l'élément de sécurité (4) a lieu tout autour de la position (R ; Z ; S) actuellement réglée de l'élément de sécurité (4).

4. Dispositif de sécurité selon l'une des revendications précédentes, **caractérisé en ce qu'**un côté droit (4a) et un côté gauche (4b) de l'élément de sécurité (4) sont déplaçables en va-et-vient dans un mouvement de vibration séparément, au moyen du dispositif de réglage (5), entre au moins deux positions (R ; Z ; S ; Z') par rapport à la surface d'assise (3).

5. Dispositif de sécurité selon l'une des revendications précédentes, **caractérisé en ce que** le dispositif de réglage (5) comprend au moins deux moteurs de réglage (6a, 6b) au moyen desquels un côté droit (4a) et un côté gauche (4b) de l'élément de sécurité (4) peuvent être réglés séparément dans au moins une position intermédiaire (Z) qui se trouve entre la position de sécurité (S) et la position de repos (R).

6. Dispositif de sécurité selon l'une des revendications précédentes, **caractérisé en ce que** le dispositif de réglage (5) comprend au moins deux moteurs de réglage (6a, 6b) au moyen desquels un côté droit (4a) et un côté gauche (4b) de l'élément de sécurité (4) peuvent être séparément pilotés.

7. Dispositif de sécurité selon l'une des revendications précédentes, **caractérisé en ce que** l'élément de sécurité (4) est agencé au-dessous de la surface d'assise (3) et est amené, en cas de collision, au moyen du dispositif de réglage (5) plus proche de la surface d'assise (3).

8. Dispositif de sécurité selon la revendication 7, **caractérisé en ce que** le dispositif de réglage (5) adapte, par réglage automatique unilatéral de la position de l'élément de sécurité (4) par rapport à la surface d'assise (3), la dureté de la surface d'assise (3) à une modification de la direction de circulation du véhicule automobile.

9. Dispositif de sécurité selon l'une des revendications précédentes, **caractérisé en ce que** l'élément de sécurité (4) est réalisé pour former une rampe.

10. Dispositif de sécurité selon la revendication 5 ou selon l'une des revendications 6 à 9 prises en dépendance de la revendication 5, **caractérisé en ce que** l'élément de sécurité (4) est réalisé sous la forme d'un barreau qui est accouplé via deux tiges d'une tringlerie (8) aux deux moteurs de réglage (6), dans lequel la tringlerie (8) s'étend le long de la direction de déplacement de l'élément de sécurité (4), et dans lequel les moteurs de réglage (6) agissent via des engrenages (7) sur la tringlerie (8) de telle manière qu'elle est déplacée le long de sa direction d'extension, et que la position de l'élément de sécurité (4) relié à celle-ci est modifiée.

11. Dispositif de sécurité selon la revendication 10, **caractérisé en ce que** les moteurs de réglage (6) sont actionnés automatiquement dans une situation de danger, et leurs sens de rotation alternent et produisent, via les engrenages (7), un mouvement de vibrations de la tringlerie (8), laquelle transmet le mouvement de vibrations à l'élément de sécurité (4).

12. Procédé pour piloter un dispositif de sécurité selon l'une des revendications précédentes, qui est associé à un siège d'un véhicule automobile, **caractérisé en ce qu'**un signal est émis par au moins un détecteur destiné à détecter le comportement de circulation du véhicule automobile, vers le dispositif de réglage (5), lequel déplace ensuite automatiquement l'élément de sécurité (4), en provoquant en particulier un mouvement de vibrations de l'élément de sécurité (4).
